# EUROPEAN PATENT APPLICATION

(11) **EP 4 303 065 A1**
(43) Date of publication of application: **10.01.2024**
(21) Application number: 23159248.6
(22) Date of filing: 28.02.2023
(51) Int. Cl.: B60L 53/10, B60L 53/22, B60L 53/24, B60L 53/62

(54) **CHARGING SYSTEM COMPATIBLE WITH LOW-VOLTAGE DIRECT-CURRENT CHARGING PILE, CONTROL METHOD AND VEHICLE THEREOF**

(30) Priority: 23.06.2022 CN 202210719460
(71) Applicant: Chongqing Changan New Energy Vehicles Technology Co., Ltd, Chongqing 401133 (CN)
(72) Inventor: CHEN, Peng, Chongqing, 401133 (CN); LIU, Li, Chongqing, 401133 (CN); CHEN, Jian, Chongqing, 401133 (CN); CHEN, Yang, Chongqing, 401133 (CN); ZHANG, Zheng, Chongqing, 401133 (CN); NIE, Dachen, Chongqing, 401133 (CN); LIN, Yuting, Chongqing, 401133 (CN)
(74) Representative: 2K Patentanwälte Blasberg Kewitz & Reichel

(57) **Abstract**

A charging system compatible with a low-voltage DC charging pile, a control method and a vehicle are provided. The charging system includes a power module, a motor winding, a motor controller, a battery controller and a vehicle controller, further includes a third switch module to connect with a power battery; and a first and a second switch module. Input ends of the first and second switch modules are connected with a high-voltage output end of the charging pile, output end of the first switch module passes through motor winding, power module to third switch module to form a DC boost charging circuit; output end of the second switch module connects the third switch module to form a DC charging circuit. The first, second and third switch modules are connected to and controlled by the motor controller.

## Description

### TECHNICAL FIELD

The disclosure belongs to a technical field of new energy electric vehicle charging, and in particular relates to a charging system compatible with a low-voltage DC charging pile, a control method of the charging system and a vehicle including the charging system.

### BACKGROUND

With the continuous development of new energy vehicle technology, in order to enhance power, torque, reduce power loss, and increase vehicle driving range, the power battery gradually tends to be high-voltage, and the charging technology of vehicle power batteries is becoming more and more important. The difficulty of charging technology is also getting higher and higher, and it is necessary to meet various charging needs of different application scenarios.

Limited by factors such as cost and geographical location, the voltage of most charging piles has not yet reached the voltage level of current high-voltage battery. When a maximum output voltage of the charging pile is lower than a voltage of the power battery, the charging pile cannot charge the battery, resulting in charging difficulty.

Therefore, it is necessary to develop a new charging system compatible with low-voltage DC charging piles, a control method and a vehicle.

### SUMMARY

The disclosure provides a charging system, a control method and a vehicle compatible with low-voltage DC charging piles, which can be compatible with low-voltage DC charging piles for charging.

The disclosure provides a charging system compatible with a low-voltage DC charging pile. The charging system includes a power module, a permanent magnet synchronous motor, a motor controller, a battery controller and a vehicle controller. The power module and the motor winding of the permanent magnet synchronous motor are configured to be connected to the motor controller. The motor controller, the battery controller and the vehicle controller are configured to be connected through a CAN bus. The battery controller is configured to connect with a charging pile to detect an output voltage of the charging pile. The charging system further includes a first switch module, a second switch module and a third switch module.

The third switch module is configured to connect with a power battery.

An input end of the first switch module is configured to connect with a high-voltage output end of the charging pile. An output end of the first switch module is configured to pass through the motor winding of the permanent magnet synchronous motor, the power module to be connected with the third switch module to form a DC(direct-current) boost charging circuit. The DC boost charging circuit is configured to convert a low-voltage direct current output from the charging pile to a high-voltage direct current to charge the power battery when the detected output voltage of the charging pile does not meet a high-voltage requirement.

An input end of the second switch module is configured to connect with the high-voltage output end of the charging pile. An output end of the second switch module is configured to be connected with the third switch module to form a DC charging circuit. The DC charging circuit is configured to directly charge the power battery when the detected output voltage of the charging pile meets the high voltage requirement.

The first switch module, the second switch module and the third switch module are all configured to be connected to the motor controller and controlled by the motor controller.

In the disclosure, the battery controller judges the charging capacity of the charging pile according to the output voltage of the charging pile, when the voltage of the charging pile meets the high-voltage charging requirement, the battery controller requests the motor controller to turn on the second switch module and the third switch module, turn off the first switch module, and charge the power battery through the DC charging circuit. When the voltage of the charging pile is judged to not meet the high-voltage charging requirement but meet the boosting charging requirement, the battery controller requests the motor controller to turn on the first switch module and the third switch module, turn off the second switch module and charge the power battery through the DC boost charging circuit, namely the high-voltage platform pure electric vehicle can be compatible with the low-voltage direct-current charging pile for charging.

According to an embodiment of the disclosure, the power module includes an A-phase bridge arm, a B-phase bridge arm and a C-phase bridge arm. The A-phase bridge arm, the B-phase bridge arm and the C-phase bridge arm of the power module are respectively connected to first ends of an inductance La, an inductance Lb and an inductance Lc of the motor winding of the permanent magnet synchronous motor in one-to-one correspondence, in order to form a DCDC boost converter. Second ends of the inductance La, the inductance Lb and the inductance Lc are connected to the charging pile via the first switch module.

When the motor controller controls the power module to perform DC boost charging, the motor controller is configured to control upper three-phase bridge arms of the power module to keep turned off, and control on/off of switching tubes of lower three-phase bridge arms of the power module. When the switching tube of the lower three-phase bridge arms is turned on, the inductance of the motor winding starts to charge; when the switching tube of the lower three-phase bridge arms is turned off, the inductance of the motor winding begins to discharge, and discharge voltage of the inductance is superimposed on a voltage of the charging pile to realize a voltage boost. In the disclosure, there is no need to set a special boost module. Only using the existing power module and the motor winding of the permanent magnet synchronous motor, by adjusting the connection relationship and configuring the corresponding control strategy, the charging pile can charge after boosting when the output voltage of the charging pile does not meet the high-voltage charging.

According to an embodiment of the disclosure, when the charging system is in boost charging, the motor controller is configured to circularly switch on/off of the inductance La, the inductance Lb and the inductance Lc of the permanent magnet synchronous motor in an interleaving control mode, and the on-off interval is 120 degrees.

According to an embodiment of the disclosure, when the charging system is in boost charging, the motor controller is configured to respectively control the switching tubes of the upper three-phase bridge arms, a switching tube VT1, a switch tube VT3 and a switch tube VT5, to be kept in an off state. The motor controller is configured to control the on-off of the inductances of the motor winding with the staggered interval of 120 degrees by outputting a PWM wave of a sinusoidal trigonometric function.

According to an embodiment of the disclosure, the motor controller respectively controls the switching tubes of the upper three-phase bridge arms, switching tube VT1, switch tube VT3 and switch tube VT5, to be kept in an off state, in detail,

the motor controller outputs an on-off signal VQ1=0 for controlling the switch tube VT1 of an upper bridge arm of the phase A, an on-off signal VQ3=0 for controlling the switch tube VT3 of an upper bridge arm of the phase B, and an on-off signal VQ5=0 for controlling the switch tube VT5 of an upper bridge arm of the phase C, in order to keep the switching tube VT1, switching tube VT3 and switching tube VT5 of the upper three-phase bridge arms in the off state.

According to an embodiment of the disclosure, the motor controller is configured to control the on-off of the inductances of the motor winding (5) with the staggered interval of 120 degrees by outputting the PWM wave of the sinusoidal trigonometric function, specifically,
the motor controller (6) sets an on-off signal VQ2=sinωt for controlling a switch tube VT2 of a lower bridge arm of phase A, an on-off signal VQ4=sin(ωt+120°) for controlling a switch tube VT4 of a lower bridge arm of phase B, and an on-off signal VQ6=sin(ωt+240°) for controlling a switch tube VT6 of a lower bridge arm of phase C, ω is the angular frequency, and a boost charging power is adjusted by changing the angular frequency;
the motor controller controls the on-off of the switch tube VT2, the switch tube VT4 and the switch tube VT6 of the lower three-phase bridge arms respectively by outputting the on-off signal VQ2, the on-off signal VQ4 and the on-off signal VQ6;
when a value of the on-off signal is greater than 0, a corresponding controlled switch tube is turned on; when the value of the on-off signal is less than or equal to 0, the corresponding controlled switch tube is turned off;
in the process of circulating on and off of the motor winding, there is always one phase that remains disconnected, which can reduce the conduction time of a single inductor, thereby reducing the heat of the rotor.

According to an embodiment of the disclosure, the motor controller controls the on-off of the switch tube VT2, the switch tube VT4 and the switch tube VT6 of the lower three-phase bridge arms respectively by outputting the on-off signal VQ2, the on-off signal VQ4 and the on-off signal VQ6, specifically,
at time t0, the motor controller controls the switch tube VT2 to start to be turned on, the switch tube VT4 to remain turned on, and the switch tube VT6 to remain turned off; at this time, the inductance La starts charging, and a current i_{La} in the inductance La begins to increase; a current i_{Lb} in the inductance Lb remains unchanged; no current passes through the inductance Lc;
at time t1, the motor controller controls the switch tube VT2 to remain turned on, the switch tube VT4 to remain turned off, and the switch tube VT6 to start to be turned on; at this time, the current i_{La} in the inductance La reaches a maximum and remains unchanged; no current passes through the inductance Lb; the inductance Lc starts to charge, the current i_{Lc} in the inductance Lc begins to increase;
at time t2, the motor controller controls the switch tube VT2 to start to be turned off, the switch tube VT4 to remain turned off, and the switch tube VT6 to remain turned on; at this time, the inductance La starts to discharge, and the current i_{La} in the inductance La decreases; no current passes through the inductance Lb; the current i_{Lc} in the inductance Lc reaches a maximum and remains unchanged;
at time t3, the motor controller controls the switch tube VT2 to remain turned off, the switch tube VT4 to start to be turned on, and the switch tube VT6 to remain turned on; at this time, a discharge of the inductance La is completed, and the current i_{La} in the inductance La=0; the inductance Lb starts to charge, and the current i_{Lb} in the inductance Lb begins to increase; the current i_{Lc} in the inductance Lc reaches a maximum and remains unchanged;
at time t4, the motor controller controls the switch tube VT2 to start to turn off, the inductance La starts to charge, the current of the inductance Lb reaches a maximum, and a discharge of the inductance Lc is completed;
the inductances of the motor winding are turned on and off in such a cycle to realize interleaving control. The disclosure provides a specific control flow of interleaved control. Compared with three-phase synchronous control, interleaved control can significantly reduce the current output ripple and reduce the output current fluctuation.

According to an embodiment of the disclosure, when one inductance of the motor winding is turned on, a charging time required for the current thereof to reach the maximum is t1-t0; when one inductance of the motor winding is turned off, a discharging time required for the current thereof to reduce to a minimum is t3-t2; the charging time and discharging time are obtained through experimental tests.

According to an embodiment of the disclosure, a waiting time t2-t1 for one inductance to be fully charged is adjustable, and a switching frequency is controlled by adjusting the waiting time, in order to control the boost charging power.

The disclosure also provides a control method for the charging system compatible with the low-voltage DC charging pile. The method uses the charging system compatible with the low-voltage DC charging pile as above and, the method includes:
S101: connecting a charging plug to a vehicle;
S102: the battery controller determining whether a communication handshake with the charging pile is successful;
S103: the charging pile performing self-checking and sending voltage information;
S104: the battery controller determining whether the charging pile meets requirements, and if meeting the requirements, proceed to S105, otherwise, the charging ends;
S105: the battery controller requesting the motor controller to turn on the boost charging circuit;
S106: the vehicle controller requesting the motor controller to enter an active short-circuit mode;
S107: the motor controller executing an active short-circuit, and lower three bridges being short-circuited;
S108: the battery controller performing an insulation detection on the DC boost charging circuit which including a neutral point connection line;
S109: the battery controller sending a voltage step-down request and a required voltage to the motor controller;
S110: the motor controller responding to the voltage step-down request and adjusting a voltage to the required voltage and feeding back a step-down mode;
S111: the battery controller sending a charging ready state of the vehicle to the charging pile after the battery controller receiving the feedback voltage and the step-down mode;
S112: the charging pile starting to output voltage after receiving the charging ready state of the vehicle;
S113: the battery controller sending a boost request and voltage and current required by BOOST to the motor controller;
S114: the motor controller responding to the boost request, outputting PWM waves to interleavely control the switching tubes of the power module, executing boost action, and feeding back the mode and voltage; at this time, the boost charging starts.

The invention provides in detail an interaction mode between the charging pile and the vehicle, and an interaction process between the control systems inside the vehicle, which can ensure the normal operation of the whole system.

According to an embodiment of the disclosure, when charging needs to be stopped or charging is about to be completed, the method further includes:
S115: the battery controller requesting the charging pile and the motor controller to reduce the current to below 5A;
S116: the battery controller sending a charging stop signal to the charging pile and the motor controller;
S117: the charging pile stopping outputting power, and the motor controller stopping outputting control any signals and switching the mode to Standby;
S118: the battery controller requesting the motor controller to turn off the boost charging circuit;
S119: the motor controller automatically and actively discharging, and the charging ended.

This control method ensures that the system can safely stop charging.

The disclosure also provides a vehicle. The vehicle includes the charging system compatible with the low-voltage DC charging pile as above.

The disclosure has the following advantages:
(1) the disclosure realizes the boost charging of the power battery by multiplexing the motor system (power module and motor winding), which improves the convenience of charging the power battery, and at the same time an external boost module is not required, which greatly reduces the cost of the vehicle and avoids a problem that the adaptability and cost of the charging system cannot be balanced.
(2) the disclosure provides two charging circuits. When the output voltage of the charging pile meets the high-voltage requirements, the power battery is charged directly through the DC charging circuit. When the output voltage of the charging pile does not meet the high-voltage requirements, the power battery is charged through the DC boost circuit.
(3) in the process of boost charging, when superimposing the three-phase output voltage on the voltage of the power battery Vout, there is always one phase inductance winding in a state of no current passing through, which can reduce the conduction time of a single inductance, thereby reducing loss.
(4) the disclosure adopts interleaving control, which can significantly reduce current output ripple and output current fluctuation compared with three-phase synchronous control.

### BRIEF DESCRIPTION OF THE DRAWINGS

FIG. 1 is a block diagram of a charging system compatible with a low-voltage DC charging pile according to an embodiment of the disclosure;
Fig. 2 is a circuit diagram (only contains the high voltage part) according to an embodiment of the disclosure;
Fig. 3 is a flowchart of controlling method according to an embodiment of the disclosure;
Fig. 4 is a waveform chart of on-off control by three-phase winding of the motor according to an embodiment of the disclosure;

In the figures: 1, first switch module, 2, second switch module, 3, third switch module, 4, power module, 5, motor winding, 6, motor controller, 7, battery controller, 8, vehicle controller, 9, power battery, 10, charging pile.

### DETAILED DESCRIPTION

The disclosure will be further described below in conjunction with figure.

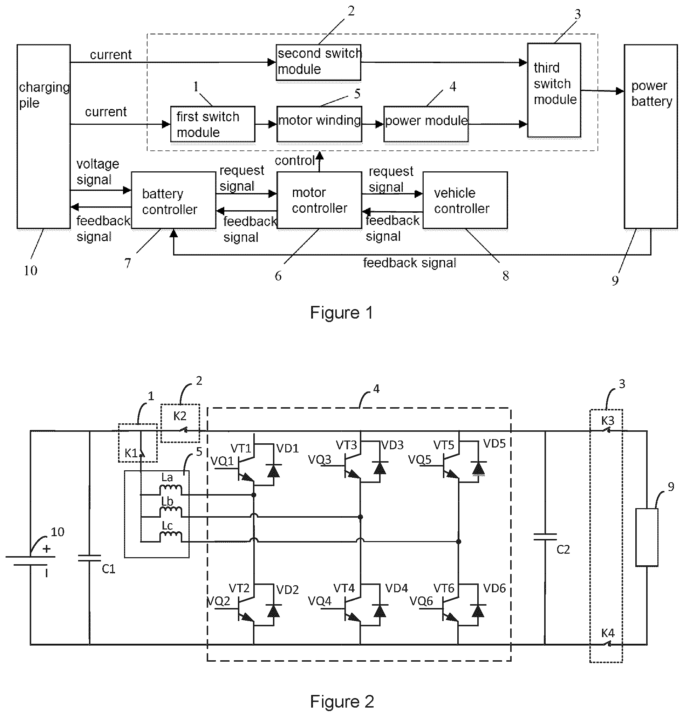

As shown in Figure 1, in this embodiment, a charging system compatible with a low-voltage DC charging pile includes a first switch module 1, a second switch module 2, a third switch module 3, a power module 4, a permanent magnet synchronous motor, a motor controller 6, a battery controller 7 and a vehicle controller 8, the connection relationship of each module is as follows:
the battery controller 7 is used for connecting with the charging pile 10 and used for detecting the output voltage of the charging pile 10. The third switch module 3 is used to connect with the power battery 9. The input end of the first switch module 1 is used to connect with the high-voltage output end of the charging pile 10, and the output end of the first switch module 1 passes through the motor winding 5 of the permanent magnet synchronous motor, the power module 4 in sequence to be connected with the third switch module 3 to form a DC boost charging circuit, which is used to convert the low-voltage DC output from the charging pile into high-voltage DC to charge the power battery 9 when it is detected that the output voltage of the charging pile does not meet the high-voltage requirements. The input end of the second switch module 2 is used to connect to the high voltage output end of the charging pile 10, and the output end of the second switch module 2 is connected to the third switch module 3 to form a DC charging circuit, which is used to charge the power battery 9 directly when it is detected that the output voltage of the charging pile 10 meets the high voltage requirements. The power module 4, the motor winding 5 of the permanent magnet synchronous motor, the first switch module 1, the second switch module 2, and the third switch module 3 are all connected to the motor controller 6 by hard wires, and are all controlled by the motor controller 6. The motor controller 6, the battery controller 7 and the vehicle controller 8 are connected through a CAN bus.

As shown in FIG. 2, in this embodiment, the power module 4 includes a first power switch unit, a second power switch unit, a third power switch unit, a fourth power switch unit, a fifth power switch unit and a sixth power switch unit. The first power switch unit and the second power switch unit form a A-phase bridge arm, the third power switch unit and the fourth power switch unit form a B-phase bridge arm, and the fifth power switch unit and the sixth power switch unit form a C-phase bridge arm. The first power switch unit includes a switch tube VT1 and a diode VD1, the second power switch unit includes a switch tube VT2 and a diode VD2, the third power switch unit includes a switch tube VT3 and a diode VD3, and the fourth power switch unit includes a switch tube VT4 and a diode VD4, the fifth power switch unit includes a switch tube VT5 and a diode VD5, the sixth power switch unit includes a switch tube VT6 and a diode VD6, and the three phase coils of the permanent magnet synchronous motor are respectively connected to the upper and lower arms of the A-phase bridge arm, B-phase bridge arm and C-phase bridge arm.

In this embodiment, the coil La(also called inductance La), coil Lb(also called inductance Lb), and coil Lc(also called inductance Lc) of the motor winding 5 of the permanent magnet synchronous motor are respectively connected with the A-phase bridge arm, B-phase bridge arm, and C-phase bridge arm of the power module in one-to-one correspondence to form a DCDC boost converter. The other ends of the inductance La, the inductance Lb and the inductance Lc are connected to the charging pile 10 through the first switch module 1.

In this embodiment, when the plug of the charging pile 10 is connected to the vehicle, the charging pile 10 detects whether the electronic lock is ready and sends charging handshake information to the battery controller 7; the battery controller 7 starts and interacts with the charging pile 10 for handshaking signals; After the handshake is successful, the charging pile 10 starts to perform circuit detection and insulation detection. After completion, the charging pile 10 sends information such as charging voltage to the battery controller 7, and the battery controller 7 judges the charging capacity of the charging pile 10. If the output voltage of the charging pile 10 meets the high-voltage requirements, the battery controller 7 requests the motor controller 6 to turn on the second switch module 2 and the third switch module 3, turn off the first switch module 1, and directly charge the power battery 9 through the DC charging circuit. If it is judged that the charging pile voltage does not meet the high-voltage charging requirements but meets the boost charging requirements, the battery controller 7 requests the motor controller 6 to turn on the first switch module 1 and the third switch module 3, and turn off the second switch module 2, to charge the power battery 9 through the DC boost charging circuit.

During the DC boost charging process, the motor controller 6 controls and turns on/off each switch module in the boost charging circuit, and feeds back the state of each switch module to the battery controller 7. The vehicle controller 8 requests the motor controller 6 to enter an active short-circuit mode. The motor controller 6 controls the switching tube VT1, switching tube VT3, and switching tube VT5 of the upper three-phase bridge arms of the power module 4, so that upper three bridge arms of the A-phase bridge arm, the B-phase bridge arm and the C-phase bridge arm are switched off, and at the same time controls the switch tube VT2, switch tube VT4 and switch tube VT6 of the lower three-phase bridge arms, so that the lower three bridge arms of the A-phase bridge arm, B-phase bridge arm, and C-phase bridge arm are short-circuited. At this time, the motor controller 6 enters the active short-circuit mode, and the battery controller 7 performs insulation detection on the DC boost charging circuit including the neutral point connection line. The battery controller 7 sends the step-down request and the required voltage to the motor controller 6, and the motor controller 6 controls the upper three-phase bridge arms, switch tube VT1, switch tube VT3, and switch tube VT5 of the power module 4, so that the upper three-phase bridge arms of the A-phase bridge arm, B-phase bridge arm and the C-phase bridge arm are short-circuited, and the switch tube VT2, the switch tube VT4 and the switch tube VT6 of the lower three-phase bridge arms of the power module 4 are controlled at the same time, so that the lower three phase bridge arms of the A-phase bridge arm, the B-phase bridge arm, and the C-phase bridge arm are cut off. Then, the motor controller 6 responds to the step-down request of the battery, adjusts the voltage to the required voltage and feeds back the step-down mode. The battery controller 7 sends a charging ready state of the vehicle to the charging pile 10 after receiving the feedback voltage and the step-down mode, and the charging pile 10 starts to output voltage upon receiving the charging ready state of the vehicle. The battery controller 7 sends a boost request and BOOST required voltage and current to the motor controller 6, and the motor controller 6 judges the change of the charging mode request, and controls the switching tube VT1, switching tube VT3, and switching tube VT5 of the power module 4, so that the upper three bridges of A phase bridge arm, B phase bridge arm and C phase bridge arm are all cut off, and the PWM signal is used to control the switch tube VT2, switch tube VT4 and switch tube VT6, so that the A phase bridge arm, B phase bridge arm and C phase bridge arm are switched on and off, so as to realize the BOOST charging function. The charging mode automatically switches from BUCK (step-down) to BOOST (step-up) after TBD (on) time, and the motor controller 6 responds to the boost request, executes the boost action and feeds back the mode and voltage. After starting charging, the battery controller 7 needs to monitor the state of the line connected with the charging pile 10 in real time, and feed back the state of the battery to the charging pile 10. When it is necessary to end charging, the battery controller 7 requests the charging pile 10 to drop the current below 5A, and requests the motor controller 6 to drop the current to be lower than 5A; the battery controller 7 sends a charging stop signal message to the charging pile 10 and the motor controller 6, the charging pile 10 stops power output, the motor controller 6 stops the control signal output and switches the mode to Standby (sleep); the battery controller 7 requests to disconnect the vehicle DC relay, and the motor controller 6 responds to the request and controls the first switch module 1, the second switch module 2 and the third switch module 3 to be turned off and feeds back the state of the relay of the switch modules. The motor controller 6 decides to actively discharge the DC boost charging circuit according to the change of the relay control command of the DC boost charging circuit requested by the battery controller 7. The motor controller 6 first controls the upper three bridges to be off and the lower three bridges to be on. Then the motor controller 6 automatically switches on the DC boost charging circuit relay to form a discharge circuit, and forms a discharge circuit current by controlling the duty cycle of the lower three-phase bridge arms.

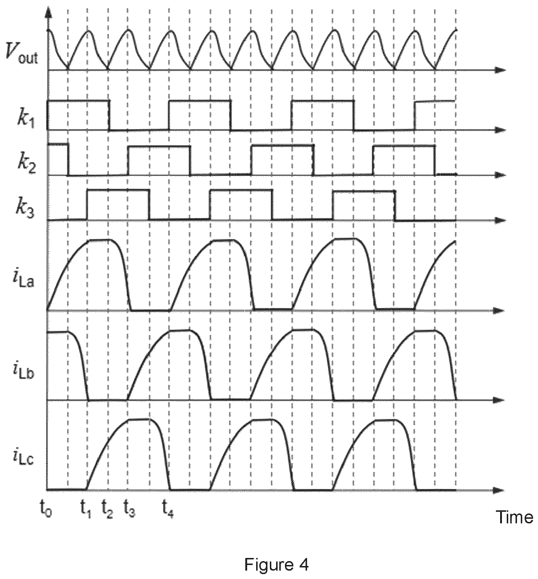

In this embodiment, when the motor controller 6 controls the power module 4 to perform DC boost charging, the motor controller 6 controls the upper three-phase bridge arms of the switch tube of the power module 4 to keep disconnected, and controls on and off of the switching tubes of the lower three-phase bridge arms of the power module 4 through PWM waves. And at this time the lower three-phase bridge arms and inductances of the motor winding 5 form a boost charging circuit. When the switching tubes of the lower three-phase bridge arms are turned on, the inductances of the motor winding 5 starts to charge; when the switching tubes of the lower three-phase bridge arms are turned off, the inductances of the motor winding 5 starts to discharge, and the discharge voltage is superimposed on the charging pile voltage, in order to realize the boost function. The control method proposed in this embodiment is shown in Figure 4, the motor controller 6 is cyclically switched on and off the inductance La, inductance Lb and inductance Lc of the permanent magnet synchronous motor through interleaved control, and the on-off cycle interval is 120 degrees.

In this embodiment, when the system is in boost charging, the motor controller 6 respectively controls the switching tube VT1, switching tube VT3 and switching tube VT5 of the upper three-phase bridge arms to remain in the off state; the motor controller 6 controls the on-off of the inductance of the motor winding 5 with the staggered interval of 120 degrees by outputting a PWM wave of a sinusoidal trigonometric function.

In this embodiment, the motor controller 6 respectively controls the switching tube VT1, switching tube VT3 and switching tube VT5 of the upper three-phase bridge arms to keep the off state, specifically:
the motor controller 6 outputs the on-off signal VQ1=0 for controlling the switch tube VT1 of the upper bridge arm of the phase A, the on-off signal VQ3=0 for controlling the switch tube VT3 of the upper bridge arm of the phase B, and an on-off signal VQ5=0 for controlling the switch tube VT5 of an upper bridge arm of the phase C, so that the switch tube VT1, the switch tube VT3 and the switch tube VT5 of the upper three-phase bridge arms in the off state.

In this embodiment, the motor controller 6 controls the on-off control of the inductance of the motor winding 5 with a staggered interval of 120 degrees by outputting the PWM wave of the sinusoidal trigonometric function, specifically:
set the on-off signal VQ2=sinωt to control the switch tube VT2 of the lower bridge arm of phase A, control the on-off signal VQ4=sin(ωt+120°) of the switch tube VT4 of the lower bridge arm of phase B, and an on-off signal VQ6=sin(ωt+240°) for controlling a switch tube VT6 of a lower bridge arm of phase C, ω is the angular frequency, and the boost charging power is adjusted by changing the angular frequency; the motor controller 6 outputs the on-off signal VQ2, The on-off signal VQ4 and the on-off signal VQ6 respectively control the on-off of the switch tube VT2, the switch tube VT4 and the switch tube VT6 of the lower three-phase bridge arms; when the value of the on-off signal is greater than 0, the controlled switch tube is turned on; when the value of the on-off signal is less than or equal to 0, the controlled switch tube is turned off.

As shown in Figure 4, in this embodiment, the motor controller 6 outputs the on-off signal VQ2, the on-off signal VQ4 and the on-off signal VQ6 to respectively control on and off of the switch tube VT2, switch tube VT4 and switch tube VT6 of the lower three-phase bridge arms, specifically:

At time t0, the control switch VT2 starts to switch on, the switch VT4 remains switched on, and the switch VT6 remains switched off. At this time, the inductance La starts to charge, the current i_{La} in the inductance La begins to increase, and the current i_{Lb} in the inductance Lb remains unchanged, there is no current passing through the inductance Lc, and the current i_{Lc} of the inductance Lc=0;

At time t1, the control switch VT2 remains switched on, the switch VT4 remains switched off, and the switch VT6 starts to switch on. At this time, the current i_{La} in the inductance La reaches the maximum and remains unchanged, and no current passes through the inductance Lb, i_{Lb}=0, the inductance Lc begins to charge, and the current i_{Lc} in the inductance Lc begins to increase.

At time t2, the control switch VT2 starts to turn off, the switch tube VT4 keeps off, and the switch tube VT6 keeps on. At this time, the inductance La starts to discharge, the current i_{La} in the inductance La decreases rapidly, and no current passes through the inductance Lb, i_{Lb} =0, the current i_{Lc} in the inductance Lc reaches the maximum and remains unchanged.

At time t3, the switch tube VT2 remains off, the switch tube VT4 starts to switch on, and the switch tube VT6 keeps on. At this time, the discharge of the inductance La is completed, the current i_{La} in the inductance La=0, the inductance Lb starts to charge, and the current i_{Lb} in the inductance Lb starts to increase, the current i_{Lc} in the inductance Lc reaches the maximum and remains unchanged.

At time t4, the switch tube VT2 starts to turn off, the inductance La starts to charge, the current of the inductance Lb reaches the maximum, and the discharge of the inductance Lc is completed.

The inductance of the motor winding 5 is switched on and off in such a cycle to realize interleaving control.

The three-phase output voltage is superimposed on the voltage Vout of the power battery as shown in Figure 4. During the process, one phase of the inductance winding is always in a state of no current passing through, which can reduce the conduction time of a single inductance, thereby reducing losses.

In this embodiment, when a single inductance of the winding is turned on, the charging time required for the current to reach the maximum is t1-t0; when the single inductance is off, the discharging time required for the current to drop to the minimum is t3-t2; the charging time and the discharge time is obtained through experimental tests. The waiting time t2-t1 for a single inductance to be fully charged can be adjusted, and the switching frequency is controlled by adjusting the waiting time to realize the control of the boost charging power.

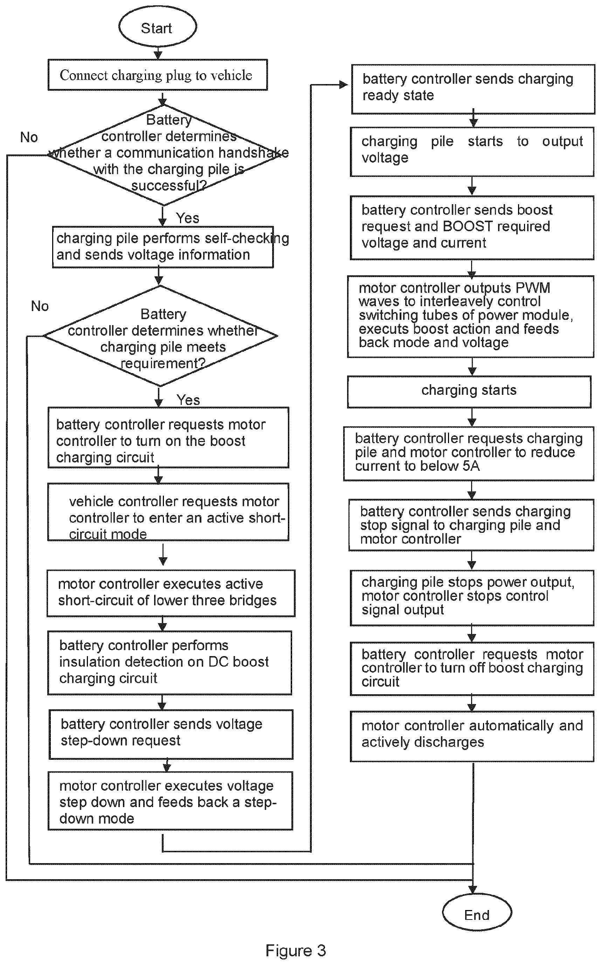

As shown in Figure 3, in this embodiment, a control method for a charging system compatible with the low-voltage DC charging pile is as follows:
S101: connect the charging plug to the vehicle;
S102: the battery controller 7 determines whether the communication handshake with the charging pile is successful;
S103: the charging pile checks itself and sends voltage information;
S104: The battery controller 7 determines whether the charging pile meets the requirements, and if so, proceeds to S105, otherwise, the charging ends;
S105: the battery controller 7 requests the motor controller 6 to close the boost charging circuit;
S106: the vehicle controller requests the motor controller 6 to enter the active short-circuit mode;
S107: the motor controller 6 executes an active short-circuit, and the lower three bridges are short-circuited;
S108: the battery controller 7 performs insulation detection on the DC boost charging circuit including the neutral point connection line;
S109: the battery controller 7 sends a step-down request and the required voltage to the motor controller 6;
S110: the motor controller 6 responds to the step-down request and adjusts the voltage to the required transformer voltage and feeds back the step-down mode;
S111: the battery controller 7 receives the feedback voltage and the step-down mode and sends the charging ready state of the vehicle to the charging pile;
S112: the charging pile receives the vehicle charging ready state and starts to output voltage;
S113: the battery controller 7 sends a boost request and BOOST required voltage and current to the motor controller 6;
S114: the motor controller 6 responds to the boost request, outputs PWM waves to interleave control the switch tubes of the power module 4, executes the boost action and feeds back the mode and voltage;

At this point, boost charging starts, when charging needs to be stopped or charging is about to be completed, the method includes:
S115: the battery controller 7 requests the charging pile and the motor controller 6 to reduce the current to below 5A;
S106: the battery controller 7 sends a charging stop signal to the charging pile and the motor controller 6;
S117: the charging pile stops power output, and the motor controller 6 stops the control signal output to switch the mode to Standby;
S118: the battery controller 7 requests the motor controller 6 to turn off the boost charging circuit;
S119: the motor controller 6 actively discharges itself, and the charging ends.

Another aspect of the present disclosure also provides a vehicle using the charging system compatible with the low-voltage DC charging pile as described in above embodiment.

The flowchart and block diagrams in the figures illustrate the architecture, functionality, and operation of possible implementations of systems, methods and computer program products according to various embodiments of the present disclosure. Each block in the flowchart or block diagram may represent a module, a program segment, or a part of the code, and the above-mentioned module, program segment, or part of the code includes one or more executable instruction. It should also be noted that, in some alternative implementations, the functions noted in the block may occur out of the order noted in the figures. For example, two blocks shown in succession may, in fact, be executed substantially concurrently, or they may sometimes be executed in the reverse order, depending upon the functionality involved. It should also be noted that each block in the block diagrams or flowchart illustrations, and combinations of blocks in the block diagrams or flowchart illustrations, can be implemented by a dedicated hardware-based system that performs the specified function or operation, or can be implemented by a combination of dedicated hardware and computer instructions.

The units described in the embodiments of the present disclosure may be implemented by software or by hardware, and the described units may also be set in a processor. The names of these units do not constitute a limitation of the unit itself under certain circumstances.

The above-mentioned embodiments are a preferred embodiment of the present disclosure, but the embodiment of the present disclosure is not limited by the above-mentioned embodiment, and any other changes, modifications, substitutions, combinations, simplifications of equivalent replacement are included in the protection scope of the present disclosure.

## Claims

1. A charging system, compatible with a low-voltage DC charging pile, comprising:
a power module (4), a motor winding (5) of a permanent magnet synchronous motor, a motor controller (6), a battery controller (7) and a vehicle controller (8); the power module (4) and the motor winding (5) of the permanent magnet synchronous motor configured to be connected to the motor controller (6); the motor controller (6), the battery controller (7) and the vehicle controller (8) configured to be connected through a CAN bus; the battery controller (7) configured to connect with a charging pile (10) to detect an output voltage of the charging pile (10); **characterized in that**, the charging system further comprises:
a third switch module (3), configured to connect with a power battery (9);
a first switch module (1), an input end of the first switch module (1) configured to connect with a high-voltage output end of the charging pile (10), and an output end of the first switch module (1) configured to pass through the motor winding (5) of the permanent magnet synchronous motor, the power module (4) to be connected with the third switch module (3) to form a DC boost charging circuit, the DC boost charging circuit configured to convert a low-voltage direct current output from the charging pile (10) to a high-voltage direct current to charge the power battery (9) when the detected output voltage of the charging pile ( 10 ) does not meet a high-voltage requirement; and
a second switch module (2), an input end of the second switch module (2) configured to connect with the high-voltage output end of the charging pile (10), and an output end of the second switch module (2) configured to be connected with the third switch module (3) to form a DC charging circuit, the DC charging circuit configured to directly charge the power battery (9) when the detected output voltage of the charging pile (10) meets the high voltage requirement;
the first switch module (1), the second switch module (2) and the third switch module (3) all configured to be connected to the motor controller (6) and controlled by the motor controller (6).

2. The charging system compatible with the low-voltage DC charging pile (10) according to claim 1, wherein,
the power module (4) comprises an A-phase bridge arm, a B-phase bridge arm and a C-phase bridge arm; the A-phase bridge arm, the B-phase bridge arm and the C-phase bridge arm of the power module (4) are respectively connected to first ends of an inductance La, an inductance Lb and an inductance Lc of the motor winding (5) of the permanent magnet synchronous motor in one-to-one correspondence, in order to form a DCDC boost converter; and second ends of the inductance La, the inductance Lb and the inductance Lc are connected to the charging pile (10) via the first switch module (1);
when the motor controller (6) controls the power module (4) to perform DC boost charging, the motor controller (6) is configured to control upper three-phase bridge arms of the power module (4) to keep disconnected, and control on/off of switching tubes of lower three-phase bridge arms of the power module (4), when the switching tube of the lower three-phase bridge arms is turned on, the inductance of the motor winding (5) starts to charge; when the switching tube of the lower three-phase bridge arms is cut off, the inductance of the motor winding (5) begins to discharge, and discharge voltage of the inductance is superimposed on a voltage of the charging pile (10) to realize a voltage boost.

3. The charging system compatible with the low-voltage DC charging pile according to claim 2, wherein,
when the charging system is in boost charging, the motor controller (6) is configured to circularly switch on/off of the inductance La, the inductance Lb and the inductance Lc of the permanent magnet synchronous motor in an interleaving control mode, and the on-off interval is 120 degrees.

4. The charging system compatible with the low-voltage DC charging pile according to claim 3, wherein
when the charging system is in boost charging, the motor controller (6) is configured to respectively control the switching tubes of the upper three-phase bridge arms, a switching tube VT1, a switch tube VT3 and a switch tube VT5, to be kept in an off state; the motor controller (6) is configured to control the on-off of the inductances of the motor winding (5) with the staggered interval of 120 degrees by outputting a PWM wave of a sinusoidal trigonometric function.

5. The charging system compatible with the low-voltage DC charging pile according to claim 4, the motor controller (6) respectively controls the switching tubes of the upper three-phase bridge arms, switching tube VT1, switch tube VT3 and switch tube VT5, to be kept in an off state, wherein
the motor controller (6) outputs an on-off signal VQ1=0 for controlling the switch tube VT1 of an upper bridge arm of the phase A, an on-off signal VQ3=0 for controlling the switch tube VT3 of an upper bridge arm of the phase B, and an on-off signal VQ5=0 for controlling the switch tube VT5 of an upper bridge arm of the phase C, in order to keep the switching tube VT1, switching tube VT3 and switching tube VT5 of the upper three-phase bridge arms in the off state.

6. The charging system compatible with the low-voltage DC charging pile according to claim 5, the motor controller (6) is configured to control the on-off of the inductances of the motor winding (5) with the staggered interval of 120 degrees by outputting the PWM wave of the sinusoidal trigonometric function, wherein
the motor controller (6) sets an on-off signal VQ2=sinωt for controlling a switch tube VT2 of a lower bridge arm of phase A, an on-off signal VQ4=sin(ωt+120°) for controlling a switch tube VT4 of a lower bridge arm of phase B, and an on-off signal VQ6=sin(ωt+240°) for controlling a switch tube VT6 of a lower bridge arm of phase C, ω is the angular frequency, and a boost charging power is adjusted by changing the angular frequency;
the motor controller (6) controls the on-off of the switch tube VT2, the switch tube VT4 and the switch tube VT6 of the lower three-phase bridge arms respectively by outputting the on-off signal VQ2, the on-off signal VQ4 and the on-off signal VQ6;
When a value of the on-off signal is greater than 0, a corresponding controlled switch tube is turned on; when the value of the on-off signal is less than or equal to 0, the corresponding controlled switch tube is turned off.

7. The charging system compatible with the low-voltage DC charging pile according to claim 6, the motor controller (6) controls the on-off of the switch tube VT2, the switch tube VT4 and the switch tube VT6 of the lower three-phase bridge arms respectively by outputting the on-off signal VQ2, the on-off signal VQ4 and the on-off signal VQ6, wherein
at time t0, the motor controller (6) controls the switch tube VT2 to start to be turned on, the switch tube VT4 to remain turned on, and the switch tube VT6 to remain turned off; at this time, the inductance La starts charging, and a current i_{La} in the inductance La begins to increase; a current i_{Lb} in the inductance Lb remains unchanged; no current passes through the inductance Lc;
at time t1, the motor controller (6) controls the switch tube VT2 to remain turned on, the switch tube VT4 to remain turned off, and the switch tube VT6 to start to be turned on; at this time, the current i_{La} in the inductance La reaches a maximum and remains unchanged; no current passes through the inductance Lb; the inductance Lc starts to charge, the current i_{Lc} in the inductance Lc begins to increase;
at time t2, the motor controller (6) controls the switch tube VT2 to start to be turned off, the switch tube VT4 to remain turned off, and the switch tube VT6 to remain turned on; at this time, the inductance La starts to discharge, and the current i_{La} in the inductance La decreases; no current passes through the inductance Lb; the current i_{Lc} in the inductance Lc reaches a maximum and remains unchanged;
at time t3, the motor controller (6) controls the switch tube VT2 to remain turned off, the switch tube VT4 to start to be turned on, and the switch tube VT6 to remain turned on; at this time, a discharge of the inductance La is completed, and the current c in the inductance La=0; the inductance Lb starts to charge, and the current i_{Lb} in the inductance Lb begins to increase; the current i_{Lc} in the inductance Lc reaches a maximum and remains unchanged;
at time t4, the motor controller (6) controls the switch tube VT2 to start to turn off, the inductance La starts to charge, the current of the inductance Lb reaches a maximum, and a discharge of the inductance Lc is completed;
the inductances of the motor winding (5) are turned on and off in such a cycle to realize interleaving control.

8. The charging system compatible with the low-voltage DC charging pile according to claim 7, wherein,
when one inductance of the motor winding is turned on, a charging time required for the current thereof to reach the maximum is t1-t0; when one inductance of the motor winding is turned off, a discharging time required for the current thereof to reduce to a minimum is t3-t2; the charging time and discharging time are obtained through experimental tests.

9. The charging system compatible with the low-voltage DC charging pile according to claim 7 or 8, wherein,
a waiting time t2-t1 for one inductance to be fully charged is adjustable, and a switching frequency is controlled by adjusting the waiting time, in order to control the boost charging power.

10. A control method for the charging system compatible with the low-voltage DC charging pile, **characterized in that**,
using the charging system compatible with the low-voltage DC charging pile according to any one of claims 1 to 9, the method comprises:
S101: connecting a charging plug to a vehicle;
S102: determining, via the battery controller (7), whether a communication handshake with the charging pile (10) is successful;
S103: performing self-checking and sending voltage information through the charging pile (10);
S104: determining, via the battery controller (7), whether the charging pile (10) meets requirements, and if meeting the requirements, proceed to S105, otherwise, the charging ends;
S105: requesting, via the battery controller (7), the motor controller (6) to turn on the boost charging circuit;
S106: requesting, via the vehicle controller (8), the motor controller (6) to enter an active short-circuit mode;
S107: executing, via the motor controller (6), an active short-circuit, and lower three bridges being short-circuited;
S108: performing, via the battery controller (7), an insulation detection on the DC boost charging circuit comprising a neutral point connection line;
S109: sending, via the battery controller (7), a voltage step-down request and a required voltage to the motor controller (6);
S110: responding, via the motor controller (6), to the voltage step-down request, adjusting a voltage to the required voltage and feeding back a step-down mode;
S111: sending, via the battery controller (7), a charging ready state of the vehicle to the charging pile (10) after the battery controller (7) receiving the feedback voltage and the step-down mode;
S112: starting, via the charging pile (10), to output voltage after receiving the charging ready state of the vehicle;
S113: sending, via the battery controller (7), a boost request and voltage and current required by BOOST to the motor controller (6);
S114: responding, via the motor controller (6), to the boost request, outputting PWM waves to interleavely control the switching tubes of the power module (4), executing boost action and feeding back the mode and voltage; at this time, the boost charging starts.

11. The control method of the charging system compatible with the low-voltage DC charging pile according to claim 10, when charging needs to be stopped or charging is about to be completed, further comprising:
S115: requesting, via the battery controller (7), the charging pile (10) and the motor controller (6) to reduce the current to below 5A;
S106: sending, via the battery controller (7), a charging stop signal to the charging pile (10) and the motor controller (6);
S117: stopping, via the charging pile (10), outputting power, and stopping, via the motor controller (6), outputting control signal to switch the mode to Standby;
S118: requesting, via the battery controller (7), the motor controller (6) to turn off the boost charging circuit;
S119: actively discharging, via the motor controller (6) itself, and the charging ended.

12. A vehicle, **characterized in that**, comprising the charging system compatible with the low-voltage DC charging pile as claimed in any one of claims 1 to 9.
